# EUROPEAN PATENT APPLICATION

(11) **EP 3 514 339 A1**
(43) Date of publication of application: **24.07.2019**
(21) Application number: 18210339.0
(22) Date of filing: 05.12.2018
(51) Int. Cl.: F01K 13/02, F01K 25/08, F01K 23/10, F01K 23/06

(54) **THERMAL ENERGY RECOVERY DEVICE**

(30) Priority: 18.01.2018 JP 2018006213
(71) Applicant: Kabushiki Kaisha Kobe Seiko Sho (Kobe Steel, Ltd.), Kobe-shi, Hyogo 651-8585 (JP)
(72) Inventor: ADACHI, Shigeto, Takasago-shi,, Hyogo 676-8670 (JP); NARUKAWA, Yutaka, Takasago-shi,, Hyogo 676-8670 (JP); NISHIMURA, Kazumasa, Takasago-shi,, Hyogo 676-8670 (JP)
(74) Representative: TBK

(57) **Abstract**

A thermal energy recovery device capable of inhibiting decomposition of a working medium is provided. A thermal energy recovery device (1) includes: a heater (20) which heats a working medium by use of heat of a heating medium; an expander (22); a power recovery machine (24); a condenser (26); a pump (28); a circulation flow passage (30); and an adjustment part (41, 42, 43) which adjusts a heat gain into the working medium within the heater (20) so that an index on a temperature of the working medium flowed out of the heater (20) is less than or equal to a set temperature.

## Description

### BACKGROUND OF THE INVENTION

### (FIELD OF THE INVENTION)

The present invention relates to a thermal energy recovery device.

### (DESCRIPTION OF THE RELATED ART)

Conventionally, a thermal energy recovery device which recovers heat from a heating medium such as exhaust gas of an engine, exhaust gas discharged from various facilities of a factory, or the like is known. For example, JP 2016-160870 A discloses a low temperature heat recovery system including a prime mover mounted on a ship, a supercharger having a turbine and a compressor, and an organic medium low temperature heat recovery mechanism which recovers heat of exhaust gas discharged from the prime mover.

The turbine is driven by the exhaust gas discharged from the prime mover. The compressor is connected to the turbine, and discharges supercharged air in association with the rotation of the turbine. The organic medium low temperature heat recovery mechanism includes a first heat exchanger which heats an organic medium (R245fa or the like) by the exhaust gas, a turbine unit including a generator, a condenser which condenses the organic medium flowed out of the turbine unit, and a circulation pump which sends the organic medium flowed out of the condenser to the first heat exchanger. The first heat exchanger is provided in a flow passage which directs the exhaust gas discharged from the turbine of the supercharger to a stack. The first heat exchanger is connected to a region between the circulation pump and the turbine unit, of a regular transfer line through which the organic medium circulates. That is, in the organic medium low temperature heat recovery mechanism, the organic medium receives heat from the exhaust gas discharged from the prime mover within the first heat exchanger, and this thermal energy is recovered by the generator of the turbine unit.

However, in the organic medium low temperature heat recovery mechanism described in JP 2016-160870 A, there is a concern that the temperature of the organic medium flowing out of the first heat exchanger exceeds a decomposition temperature of the organic medium due to an increase in temperature of the exhaust gas supplied to the first heat exchanger, for example.

An object of the present invention is to provide a thermal energy recovery device capable of inhibiting decomposition of a working medium.

As a means for solving the above problem, the present invention provides a thermal energy recovery device including: a heater which heats a working medium by use of heat of a heating medium; an expander which expands the working medium flowed out of the heater; a power recovery machine connected to the expander; a condenser which condenses the working medium flowed out of the expander; a pump which sends the working medium flowed out of the condenser to the heater; a circulation flow passage which connects the heater, the expander, the condenser, and the pump in this order; and an adjustment part which adjusts a heat gain into the working medium within the heater so that an index on a temperature of the working medium flowed out of the heater is less than or equal to a set temperature.

In the present thermal energy recovery device, the adjustment part adjusts the heat gain into the working medium within the heater so that the index (the temperature of a heating medium (exhaust gas or the like) flowing into the heater or the temperature of the working medium flowed out of the heater) is less than or equal to the set temperature, so the set temperature is set to a decomposition temperature of the working medium, and thereby decomposition of the working medium is effectively inhibited.

Moreover, preferably, the thermal energy recovery device further includes a heating medium flow passage through which the heating medium flows, and the heater is provided in the heating medium flow passage.

In this aspect, heat of the heating medium is directly charged into the working medium.

Moreover, the adjustment part may have a cooling part which is provided in a region, of the heating medium flow passage, on an upstream side of the heater, and which cools the heating medium so that the temperature of the heating medium flowing into the heater is less than or equal to the set temperature.

Also in this aspect, the temperature of the working medium flowing out of the heater becomes less than or equal to the set temperature effectively.

Moreover, the heating medium flow passage connects an engine, the cooling part and the heater in this order so that exhaust gas of the engine is supplied to the heater as the heating medium, and the cooling part may have a scrubber which cools the heating medium by a cooling medium.

In this aspect, exhaust heat of the exhaust gas of the engine is effectively utilized, and besides, cleaning and cooling of the exhaust gas is simultaneously performed by the scrubber.

Alternatively, the cooling part may have a cooler which cools the heating medium by a cooling medium.

Also in this aspect, the temperature of the working medium flowing out of the heater becomes less than or equal to the set temperature effectively.

Alternatively, the heating medium flow passage connects an engine, the cooling part and the heater in this order so that exhaust gas of the engine is supplied to the heater as the heating medium, and the cooling part may have a fan which supplies gas of a temperature lower than the temperature of the heating medium to the heating medium flow passage.

Also in this aspect, the temperature of the working medium flowing out of the heater becomes less than or equal to the set temperature effectively.

Moreover, the adjustment part preferably performs cooling of the heating medium by the cooling part when the temperature of the heating medium flowing into the heater or the temperature of the working medium flowed out of the heater becomes greater than or equal to a reference temperature lower than the set temperature.

In this aspect, the heating medium is cooled by the cooling part when the temperature of the heating medium flowing into the heater or the temperature of the working medium flowed out of the heater becomes greater than or equal to the reference temperature, so the temperature of the working medium flowing out of the heater becomes less than or equal to the set temperature effectively.

Moreover, the adjustment part preferably adjusts an inflow amount of the working medium to the heater so that the temperature of the working medium flowed out of the heater as the index is less than or equal to the set temperature.

In this aspect, in addition to the cooling part, adjustment of the inflow amount of the working medium to the heater is also performed, so the temperature of the working medium flowing out of the heater can be surely less than or equal to the set temperature.

Moreover, the thermal energy recovery device may further include a heating medium flow passage through which the heating medium flows, a heat exchanger which evaporates an intermediate medium by exchanging heat between the heating medium and the intermediate medium, and an intermediate medium flow passage through which the intermediate medium flows, and the heater may be provided in a region, of the intermediate medium flow passage, on a downstream side of the heat exchanger.

In this aspect, heat of the heating medium is effectively charged into the working medium via the intermediate medium (water or the like).

Moreover, the adjustment part preferably adjusts a heat gain from the intermediate medium into the working medium within the heater so that the index is less than or equal to the set temperature.

Concretely, the adjustment part preferably has a pressure reducing valve provided in a region, of the intermediate medium flow passage, between the heat exchanger and the heater, and a control part which adjusts opening of the pressure reducing valve so that the index is less than or equal to the set temperature.

Moreover, the adjustment part may have a bypass flow passage connected to the heating medium flow passage so as to bypass the heater, and an inflow amount adjustment unit which adjusts a heat gain from the heating medium into the working medium within the heater so that the temperature of the working medium flowed out of the heater is less than or equal to the set temperature by adjusting a flow rate of the heating medium flowing into the bypass flow passage and a flow rate of the heating medium flowing into the heater.

In this aspect, the inflow amount adjustment unit adjusts the flow rate of the heating medium flowing into the bypass flow passage and the flow rate of the heating medium flowing into the heater, thereby the temperature of the working medium flowing out of the heater becomes less than or equal to the set temperature effectively.

Moreover, the inflow amount adjustment unit preferably has a bypass valve provided in the bypass flow passage and capable of adjusting opening thereof, and a control part which controls opening of the bypass valve so that the temperature of the working medium flowed out of the heater is less than or equal to the set temperature.

In this aspect, the control part adjusts the opening of the bypass valve, thereby the flow rate of the heating medium flowing into the bypass flow passage and the flow rate of the heating medium flowing into the heater are adjusted.

Moreover, preferably, the inflow amount adjustment unit further has an on-off valve provided in a region, of the heating medium flow passage, parallel to the bypass flow passage, and capable of adjusting opening thereof, and the control part controls the opening of the bypass valve and the opening of the on-off valve so that the temperature of the working medium flowed out of the heater is less than or equal to the set temperature.

In this aspect, it is possible to more precisely adjust the flow rate of the heating medium flowing into the bypass flow passage and the flow rate of the heating medium flowing into the heater. Moreover, compared to the case where a three-way valve is provided in a connection between the heating medium flow passage and an end portion on the upstream side of the bypass flow passage, pressure loss generated in the heating medium is reduced.

Moreover, the bypass valve and the on-off valve are preferably butterfly valves.

Moreover, the control part preferably performs superheat degree control for controlling the opening of the bypass valve, the opening of the on-off valve, and the inflow amount of the working medium to the heater so that a degree of superheat of the working medium flowed out of the heater falls within a predetermined range.

In this aspect, it is possible to improve the power the power recovery machine recovers via the expander while effectively maintaining the temperature of the working medium flowing out of the heater to be less than or equal to the set temperature.

Moreover, in the superheat degree control, when the degree of superheat is smaller than a lower limit of the predetermined range, the control part preferably prioritizes control for increasing the opening of the on-off valve over an operation for reducing the opening of the bypass valve.

In this way, compared to the case where the operation for reducing the opening of the bypass valve is prioritized, it is possible to increase the inflow amount of the heating medium to the heater (the heat gain from the heating medium into the working medium within the heater) while avoiding the increase in pressure loss generated in the heating medium.

Moreover, in the superheat degree control, when the degree of superheat is larger than an upper limit of the predetermined range, the control part preferably prioritizes an operation for increasing the opening of the bypass valve over an operation for reducing the opening of the on-off valve.

In this way, compared to the case where the opening of the on-off valve is reduced, it is possible to reduce the inflow amount of the heating medium to the heater (the heat gain from the heating medium into the working medium within the heater) while reducing pressure loss generated in the heating medium.

Moreover, during the superheat degree control, when the temperature of the working medium flowed out of the heater becomes larger than the set temperature, the control part preferably performs emergency control for maximizing the opening of the bypass valve and reducing the opening of the on-off valve.

In this aspect, it is possible to effectively inhibit decomposition of the working medium by reducing the inflow amount of the heating medium to the heater (a heat receiving amount of the working medium in the heater) while avoiding the increase in pressure loss generated in the heating medium by maximizing the opening of the bypass valve.

Further, after the emergency control, the control part preferably performs the superheat degree control when the temperature of the working medium flowed out of the heater becomes less than or equal to the set temperature.

In this way, effective inhibition of decomposition of the working medium and effective recovery of heat of the heating medium are both achieved.

Moreover, the control part preferably performs stop control for reducing the inflow amount of the working medium to the heater and the inflow amount of the heating medium to the heater so that a state that the degree of superheat of the working medium flowed out of the heater falls within the predetermined range and the temperature of the working medium flowed out of the heater is less than or equal to the set temperature is maintained.

In this aspect, it is possible to stably stop the thermal energy recovery device while combining both the inhibition of decomposition of the working medium and the effective recovery of heat of the heating medium.

Further, during the stop control, the control part preferably closes the on-off valve when stop conditions indicating stop of heat recovery of the working medium from the heating medium within the heater are established.

In this aspect, the on-off valve is closed when the stop conditions (a frequency of the pump is less than or equal to a set value, a predetermined time passes after stop of the pump, and so on) are established, so continuation of inflow of the heating medium to the heater at the time of stoppage of the device, that is, continuation of evaporation of the working medium in the heater, and thereby increase in the temperature of the working medium flowed out of the heater are inhibited.

Moreover, the control part preferably performs start-up control for increasing the inflow amount of the working medium to the heater and the inflow amount of the heating medium to the heater so that the state that the degree of superheat of the working medium flowed out of the heater falls within the predetermined range and the temperature of the working medium flowed out of the heater is less than or equal to the set temperature is maintained.

In this aspect, it is possible to stably start the thermal energy recovery device while combining both the inhibition of decomposition of the working medium and the effective recovery of heat of the heating medium.

As described above, according to the present invention, it is possible to provide a thermal energy recovery device capable of inhibiting decomposition of the working medium.

### BRIEF DESCRIPTION OF THE DRAWINGS

FIG. 1 is a diagram schematically showing a configuration of a thermal energy recovery device of a first embodiment of the present invention.
FIG. 2 is a diagram schematically showing a modification of the thermal energy recovery device of the first embodiment.
FIG. 3 is a diagram schematically showing a configuration of the thermal energy recovery device of a second embodiment of the present invention.
FIG. 4 is a diagram schematically showing a configuration of the thermal energy recovery device of a third embodiment of the present invention.
FIG. 5 is a flow chart showing control contents of start-up control and superheat degree control of a control part.
FIG. 6 is a flow chart showing control contents of emergency control of the control part.
FIG. 7 is a flow chart showing control contents of stop control of the control part.
FIG. 8 is a diagram schematically showing a modification of the thermal energy recovery device of the third embodiment.

### DESCRIPTION OF THE PREFERRED EMBODIMENTS

Hereinafter, preferred embodiments of the present invention will be described with reference to the drawings.

### (First Embodiment)

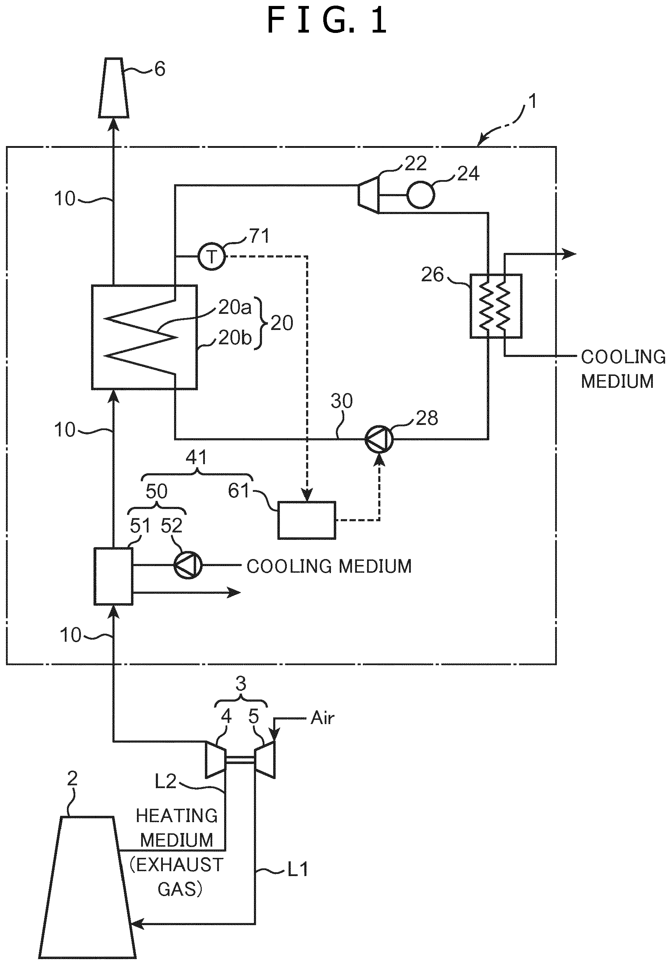

A thermal energy recovery device 1 of the first embodiment of the present invention will be described with reference to FIG. 1. The thermal energy recovery device 1 is a device which generates power by recovering heat from a heating medium (exhaust gas in the present embodiment). In the present embodiment, the thermal energy recovery device 1 is mounted on a ship having an engine 2 and a supercharger 3. The supercharger 3 has a turbine 4 driven by exhaust gas discharged from the engine 2, and a compressor 5 which is connected to the turbine 4 and which discharges supercharged air to be supplied to the engine 2. The supercharged air discharged from the compressor 5 is supplied to the engine 2 through an intake line L1 connecting the compressor 5 and the engine 2. The exhaust gas discharged from the engine 2 is supplied to the turbine 4 through an exhaust line L2 connecting the engine 2 and the turbine 4.

As shown in FIG. 1, the thermal energy recovery device 1 includes a heating medium flow passage 10, a heater 20, an expander 22, a power recovery machine 24, a condenser 26, a pump 28, a circulation flow passage 30, and an adjustment part 41. The circulation flow passage 30 connects the heater 20, the expander 22, the condenser 26, and the pump 28 in this order.

The heating medium flow passage 10 is a flow passage through which the heating medium flows. In the present embodiment, the heating medium flow passage 10 directs to a stack 6 the exhaust gas (the heating medium) discharged from the turbine 4. In addition, in FIG. 1, for the purpose of convenience, although the heating medium is shown as flowing into the heater 20 from a lower portion thereof and flowing out of an upper portion thereof, in order that the flow of the heating medium becomes an opposed flow to the flow of a working medium, the heating medium actually flows into the heater 20 from the upper portion thereof and flows out of the lower portion thereof. Moreover, the heating medium flow passage 10 is connected to a side surface of the heater 20.

The heater 20 is provided in the heating medium flow passage 10. The heater 20 heats the working medium by use of heat of the heating medium. Concretely, the heater 20 heats the working medium by exchanging heat between the heating medium flowing through the heating medium flow passage 10 and the working medium (R245fa or the like). In the present embodiment, as the heater 20, a so-called shell and tube heat exchanger is used. That is, the heater 20 has a heat transfer pipe 20a through which the working medium flows, and a casing 20b containing the heat transfer pipe 20a and constituting the flow passage of the heating medium. In the present embodiment, the heater 20 is used as an evaporator which evaporates the working medium. However, the heater 20 may be used as a heat exchanger which heats the working medium in a liquid phase to such an extent that the working medium is not evaporated (allows the working medium in a liquid phase to flow out as it is), or may be used as a super heater which heats the working medium so that the working medium is in a superheated state.

The expander 22 is provided in a region, of the circulation flow passage 30, on a downstream side of the heater 20. The expander 22 expands the working medium in a gas phase flowed out of the heater 20. In the present embodiment, as the expander 22, a positive displacement screw expander having a rotor rotationally driven by expansion energy of the working medium in a gas phase is used.

The power recovery machine 24 is connected to the expander 22. The power recovery machine 24 rotates in association with driving of the expander 22, thereby recovering power from the working medium. In the present embodiment, a generator is used as the power recovery machine 24. In addition, as the power recovery machine 24, a compressor or the like may be used.

The condenser 26 is provided in a region, of the circulation flow passage 30, on a downstream side of the expander 22. The condenser 26 condenses the working medium by exchanging heat between the working medium flowed out of the expander 22 and a cooling medium (seawater or the like).

The pump 28 is provided in a region, of the circulation flow passage 30, on a downstream side of the condenser 26 (a region between the condenser 26 and the heater 20). The pump 28 sends the working medium in a liquid phase flowed out of the condenser 26 to the heater 20.

The adjustment part 41 adjusts a heat gain from the heating medium into the working medium within the heater 20 so that a temperature T of the working medium flowed out of the heater 20 is less than or equal to a set temperature Tₛₑₜ. In addition, the temperature T is detected by a temperature sensor 71 provided in a region, of the circulation flow passage 30, between the heater 20 and the expander 22. The set temperature Tₛₑₜ is set to a decomposition temperature (for example, 200 °C) of the working medium. In addition, the temperature of the heating medium flowing into the heater 20 (in the present embodiment, the temperature of a region, of the heating medium flow passage 10, on an upstream side of the heater 20) is correlated to the temperature T of the working medium flowed out of the heater 20, so the adjustment part 41 may adjust the heat gain from the heating medium to the working medium within the heater 20 so that the temperature of the heating medium flowing into the heater 20 rather than the temperature T of the working medium flowed out of the heater 20 is less than or equal to the set temperature Tₛₑₜ. That is, the adjustment part 41 adjusts the heat gain into the working medium within the heater 20 based on the temperature T itself of the working medium flowed out of the heater 20, or an index on the temperature T (the temperature of the heating medium flowing into the heater 20, or the like).

In the present embodiment, the adjustment part 41 has a cooling part 50 provided in a region, of the heating medium flow passage 10, on the upstream side of the heater 20 (a region between the turbine 4 and the heater 20), and preferably has a control part 61.

The cooling part 50 cools the heating medium so that the temperature of the heating medium flowing into the heater 20 is less than or equal to the set temperature Tₛₑₜ. In the present embodiment, the cooling part 50 has a scrubber 51 which cools the heating medium by the cooling medium (seawater or the like), and a cooling medium pump 52 which sends the cooling medium to the scrubber 51. The scrubber 51 supplies the cooling medium to the heating medium discharged from the turbine 4, thereby removing SOx and the like contained in the heating medium and cooling the heating medium. The reasons why the scrubber 51 is used are as follows. That is, it was found that the working medium is at risk of being decomposed because the temperature of the exhaust gas is high even if trying to recover heat directly from the exhaust gas, and that in the downstream of the scrubber, the temperature of the exhaust gas is not too high and heat quantity capable of recovering by the thermal energy recovery device 1 exists, and therefore, the heater 20 is arranged in the downstream of the scrubber 51.

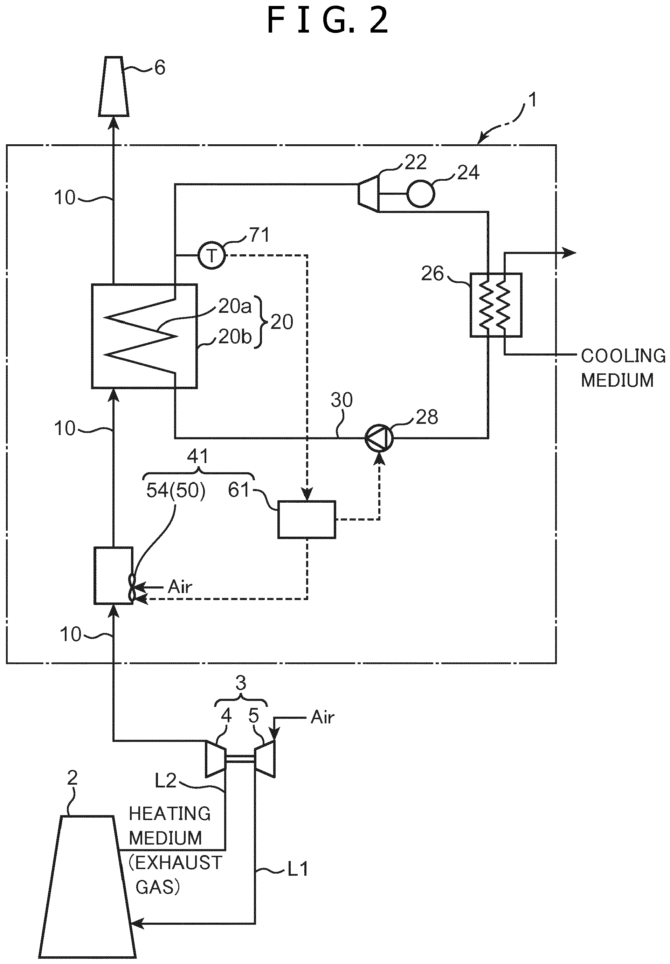

In addition, the cooling part 50 may have, instead of the scrubber 51, a cooler (a shell and tube heat exchanger or the like) which cools the heating medium by exchanging heat between the heating medium and the cooling medium. Alternatively, as shown in FIG. 2, the cooling part 50 may have a fan 54 which supplies to the heating medium flow passage 10 gas (air or the like) of a temperature lower than the temperature of the heating medium. In these cases, the adjustment part 41 may perform cooling of the heating medium by the cooling part (the cooler or the fan 54) only when the temperature T of the working medium flowed out of the heater 20 becomes greater than or equal to a reference temperature (for example, 150 °C to 180 °C) lower than the set temperature Tₛₑₜ. In this way, compared to the case where cooling of the heating medium is constantly performed by the cooling part, heat of the heating medium is effectively recovered by the heater 20, and further power consumption of the cooling medium pump 52 or the fan 54 is reduced. In addition, cooling of the heating medium by the cooling part means driving of the cooling medium pump 52 if the cooler is used, and means driving of the fan 54 if the fan 54 is used.

The control part 61 controls an inflow amount of the working medium to the heater 20 so that the temperature T (the index) of the working medium flowed out of the heater 20 is less than or equal to the set temperature Tₛₑₜ. In the present embodiment, the control part 61 controls the inflow amount of the working medium to the heater 20 by controlling frequency of the pump 28. In addition, control of the inflow amount of the working medium to the heater 20 is not limited to this example. For example, a pump bypass flow passage (not shown) may be provided in the circulation flow passage 30 so as to bypass the pump 28 and an on-off valve (not shown) may be provided in the pump bypass flow passage, and the control part 61 may adjust the inflow amount of the working medium to the heater 20 by adjusting opening of the on-off valve.

As described above, in the thermal energy recovery device 1 of the present embodiment, the adjustment part 41 adjusts the heat gain into the working medium within the heater 20 so that the index (the temperature of the heating medium (exhaust gas or the like) flowing into the heater 20 or the temperature T of the working medium flowed out of the heater 20) is less than or equal to the set temperature Tₛₑₜ, so the set temperature Tₛₑₜ is set to a decomposition temperature of the working medium, and thereby decomposition of the working medium is effectively inhibited.

In addition, the adjustment part 41 does not always have to adjust the temperature on the downstream side of the cooling part 50 positively, and it is sufficient that a suitable environment within the thermal energy recovery device 1 can be consequently achieved.

### (Second Embodiment)

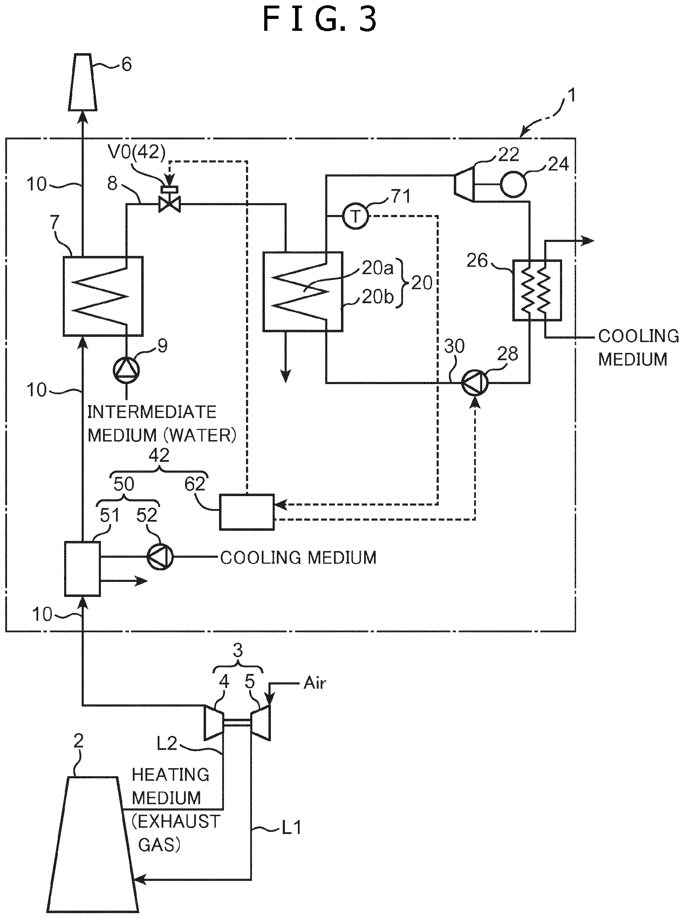

Next, referring to FIG. 3, the thermal energy recovery device 1 of a second embodiment of the present invention will be described. It should be noted that in the second embodiment, only the portions different from the first embodiment will be described and the description of the same structures, actions and effects as the first embodiment will be omitted.

In the present embodiment, the heater 20 does not charge heat of the heating medium (exhaust gas) directly into the working medium (directly exchange heat between the heating medium and the working medium), but charges heat of the heating medium into the working medium via an intermediate medium (water in the present embodiment). Concretely, the thermal energy recovery device 1 of the present embodiment further includes a heat exchanger 7, and an intermediate medium flow passage 8 through which the intermediate medium flows.

The heat exchanger 7 is provided in a region, of the heating medium flow passage 10, on the downstream side of the scrubber 51. The heat exchanger 7 evaporates the intermediate medium by exchanging heat between the heating medium and the intermediate medium. In the present embodiment, a boiler is used as the heat exchanger 7. To the heat exchanger 7, the intermediate medium is supplied by an intermediate medium pump 9 provided in the intermediate medium flow passage 8.

The heater 20 is provided in a region, of the intermediate medium flow passage 8, on the downstream side of the heat exchanger 7. Therefore, in the heater 20, the working medium is heated by the intermediate medium (water vapor) in a gas phase flowed out of the heat exchanger 7.

In the present embodiment, an adjustment part 42 adjusts a heat gain from the intermediate medium into the working medium within the heater 20 so that the index is less than or equal to the set temperature Tₛₑₜ. Concretely, the adjustment part 42 has, in addition to the cooling part 50, a pressure reducing valve V0 provided in a region, of the intermediate medium flow passage 8, between the heat exchanger 7 and the heater 20, and a control part 62 which adjusts opening of the pressure reducing valve V0 so that the index is less than or equal to the set temperature Tₛₑₜ. However, a heater bypass flow passage (not shown) may be provided in the intermediate medium flow passage 8 so as to bypass the heater 20 and an on-off valve (not shown) may be provided in the heater bypass flow passage, and the control part 62 may adjust the inflow amount of the working medium to the heater 20 by adjusting opening of the on-off valve. Alternatively, the adjustment part 42 may adjust frequency of the intermediate medium pump 9. Moreover, as long as the temperature of the heating medium flowing into the heat exchanger 7 is less than or equal to the set temperature Tₛₑₜ, the control part 62 does not have to adjust a flow rate of the intermediate medium flowing into the heater 20.

### (Third Embodiment)

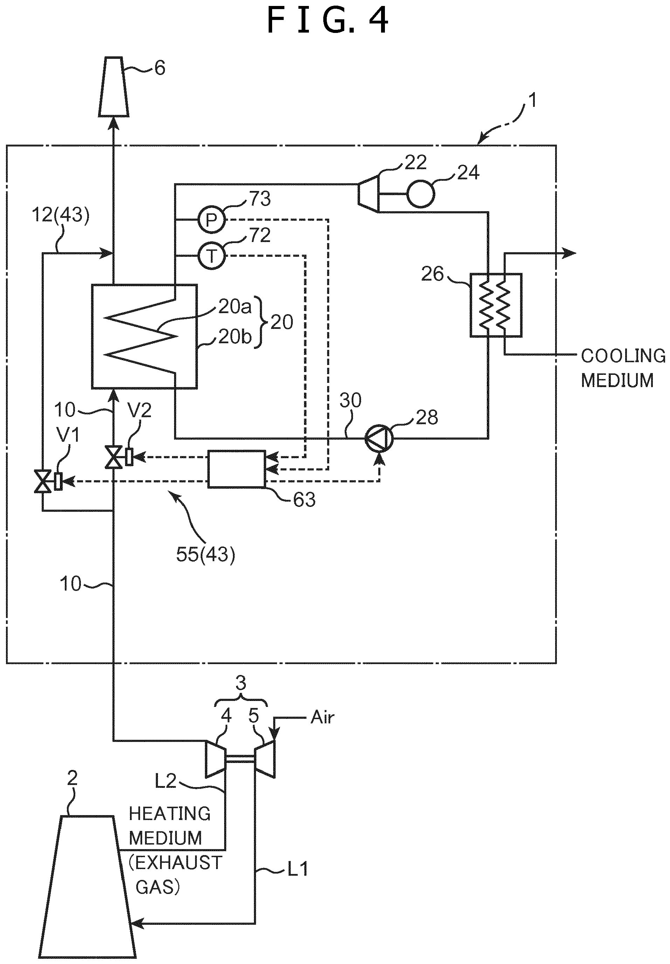

Next, referring to FIG. 4 to FIG. 7, the thermal energy recovery device 1 of a third embodiment of the present invention will be described. It should be noted that in the third embodiment, only the portions different from the first embodiment will be described and the description of the same structures, actions and effects as the first embodiment will be omitted.

In the present embodiment, an adjustment part 43 has a bypass flow passage 12 connected to the heating medium flow passage 10 so as to bypass the heater 20, and an inflow amount adjustment unit 55.

The inflow amount adjustment unit 55 adjusts the flow rate of the heating medium flowing into the bypass flow passage 12 and the flow rate of the heating medium flowing into the heater 20, thereby adjusting the heat gain from the heating medium into the working medium within the heater 20 so that the temperature T of the working medium flowed out of the heater 20 is less than or equal to the set temperature Tₛₑₜ.

Concretely, the inflow amount adjustment unit 55 has a bypass valve V1 provided in the bypass flow passage 12, an on-off valve V2 provided in a region, of the heating medium flow passage 10, parallel to the bypass flow passage 12 and on the upstream side of the heater 20, and a control part 63. The respective valves V1, V2 are capable of adjusting opening thereof. In the present embodiment, butterfly valves are used as the respective valves V1, V2. In addition, as the respective valves V1, V2, a ball valve or a gate valve may be used. Moreover, the on-off valve V2 may be omitted.

The control part 63 controls the opening of the respective valves V1, V2 so that the temperature T of the working medium flowed out of the heater 20 is less than or equal to the set temperature Tₛₑₜ, and preferably controls also the inflow amount of the working medium to the heater 20 (the frequency of the pump 28). Concretely, the control part 63 performs superheat degree control, emergency control, stop control, and start-up control.

In the superheat degree control, the opening of the bypass valve V1, the opening of the on-off valve V2, and the inflow amount of the working medium to the heater 20 (the frequency of the pump 28) are operated so that a degree of superheat α of the working medium flowed out of the heater 20 falls within a predetermined range. In addition, the degree of superheat α is calculated based on each detected value of a temperature sensor 72 and a pressure sensor 73 provided in a region, of the circulation flow passage, between the heater 20 and the expander 22. Moreover, in the superheat degree control, when the degree of superheat α is smaller than a lower limit α2 of the predetermined range, the control part 63 prioritizes control for increasing the opening of the on-off valve V2 over an operation for reducing the opening of the bypass valve V1. Moreover, in the superheat degree control, when the degree of superheat α is larger than an upper limit α1 of the predetermined range, the control part 63 prioritizes an operation for increasing the opening of the bypass valve V1 over an operation for reducing the opening of the on-off valve V2.

In the stop control, the inflow amount of the working medium to the heater 20 (the frequency of the pump 28) and the inflow amount of the heating medium to the heater 20 are reduced so that a state that the degree of superheat α of the working medium flowed out of the heater 20 falls within the predetermined range and the temperature T of the working medium flowed out of the heater 20 is less than or equal to the set temperature Tₛₑₜ is maintained. Moreover, during the stop control, the control part 63 closes the on-off valve V2 when stop conditions indicating stop of heat recovery of the working medium from the heating medium within the heater 20 are established. In addition, the following stop conditions are given as examples. The frequency of the pump 28 becomes less than or equal to a minimum value (a lower limit in which stable driving of the pump 28 is maintained), a predetermined time passes after stop of the pump 28, and so on.

In the start-up control, the inflow amount of the working medium to the heater 20 (the frequency of the pump 28) and the inflow amount of the heating medium to the heater 20 are increased so that the state that the degree of superheat α of the working medium flowed out of the heater 20 falls within the predetermined range and the temperature T of the working medium flowed out of the heater 20 is less than or equal to the set temperature Tₛₑₜ is maintained.

In the emergency control, during the superheat degree control, the stop control, and the start-up control, when the temperature T of the working medium flowed out of the heater 20 becomes larger than the set temperature Tₛₑₜ, the opening of the bypass valve V1 is maximized and the opening of the on-off valve V2 is reduced. After the emergency control, the control part 63 performs the superheat degree control when the temperature T of the working medium flowed out of the heater 20 becomes less than or equal to the set temperature Tₛₑₜ.

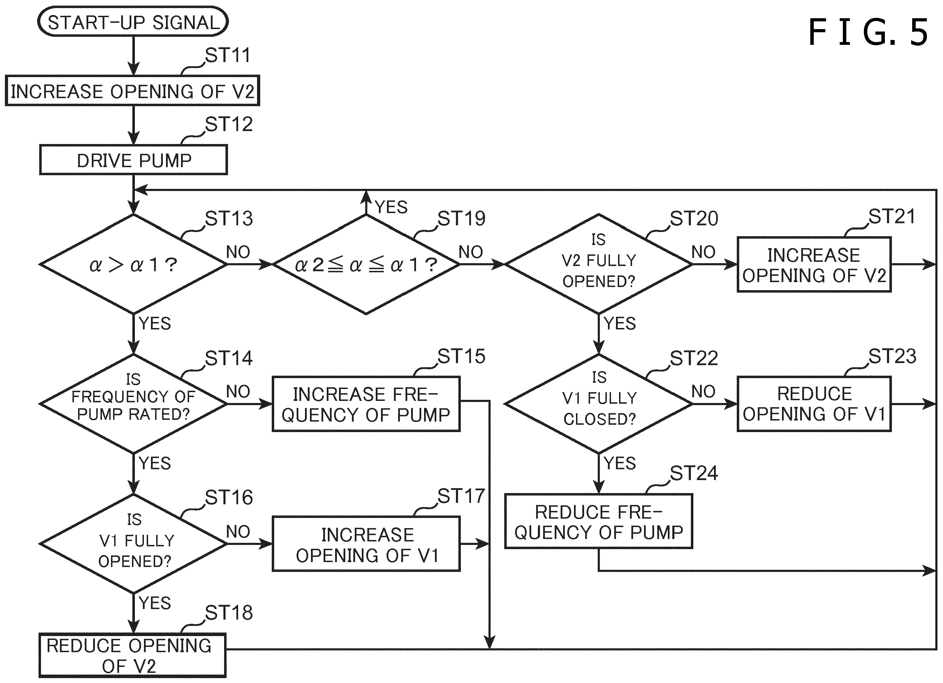

Hereinafter, referring to FIG. 5 to FIG. 7, concrete control contents of the control parts 63 will be described. First, referring to FIG. 5, the start-up control and the superheat degree control will be described. In addition, before start-up of the thermal energy recovery device 1, the bypass valve V1 is fully opened and the on-off valve V2 is fully closed.

In this state, when receiving a start-up signal, the control part 63 increases the opening of the on-off valve V2 (step ST11), and drives the pump 28 (step ST12).

Next, the control part 63 judges whether or not the degree of superheat α is larger than the upper limit α1 (step ST13). As a result, if the degree of superheat α is larger than the upper limit α1, the control part 63 checks whether or not the frequency of the pump 28 is rated (step ST14). As a result, if the frequency of the pump 28 is not rated, the control part 63 increases the frequency of the pump 28 (step ST15), and returns to the step ST13. Thereby, the degree of superheat α is reduced, and recovered amount of power by the power recovery machine 24 is increased.

On the other hand, if the frequency of the pump 28 is rated in the step ST14, that is, if the heat gain from the heating medium into the working medium within the heater 20 is excessive, the control part 63, in order to reduce the heat gain, firstly judges whether or not the opening of the bypass valve V1 is fully opened (step ST16). As a result, if the opening of the bypass valve V1 is not fully opened, the control part 63 increases the opening of the bypass valve V1 (step ST17), and returns to the step ST13. Thereby, the inflow amount of the heating medium to the bypass flow passage 12 is increased, so the heat gain is reduced. On the other hand, if the opening of the bypass valve V1 is fully opened in the step ST16 (adjustment of the heat gain by the bypass valve V1 cannot be performed), the control part 63 reduces the opening of the on-off valve V2 in order to reduce the heat gain (step ST18), and returns to the step ST13.

Moreover, in the step ST13, if the degree of superheat α is not larger than the upper limit α1 (NO in the step ST13), the control part 63 judges whether or not the degree of superheat α is not less than the lower limit α2 and not more than the upper limit α1 (step ST19). As a result, if the degree of superheat α is not less than the lower limit α2 and not more than the upper limit α1, the control part 63 returns to the step ST13. On the other hand, if the degree of superheat α is outside the range of not less than the lower limit α2 and not more than the upper limit α1, that is, if the degree of superheat α is less than the lower limit α2 (if the heat gain is insufficient), the control part 63 firstly judges whether or not the opening of the on-off valve V2 is fully opened (step ST20). As a result, if the opening of the on-off valve V2 is not fully opened, the control part 63 increases the opening of the on-off valve V2 in order to increase the heat gain (step ST21), and returns to the step ST13. On the other hand, if the opening of the on-off valve V2 is fully opened in the step ST20 (adjustment of the heat gain by the on-off valve V2 cannot be performed), the control part 63 judges whether or not the opening of the bypass valve V1 is fully closed (step ST22). Then, if the opening of the bypass valve V1 is not fully closed, the control part 63 reduces the opening of the bypass valve V1 (step ST23), and returns to the step ST13. Thereby, the inflow amount of the heating medium to the heater 20 is increased, so the heat gain is increased. Therefore, the degree of superheat α is increased.

On the other hand, in the step ST22, if the opening of the bypass valve V1 is fully closed, that is, if an operation for increasing the heat gain by the respective valves V1, V2 cannot be performed, the control part 63 reduces the frequency of the pump 28 (step ST24), and returns to the step ST13. Thereby, the degree of superheat α is reduced.

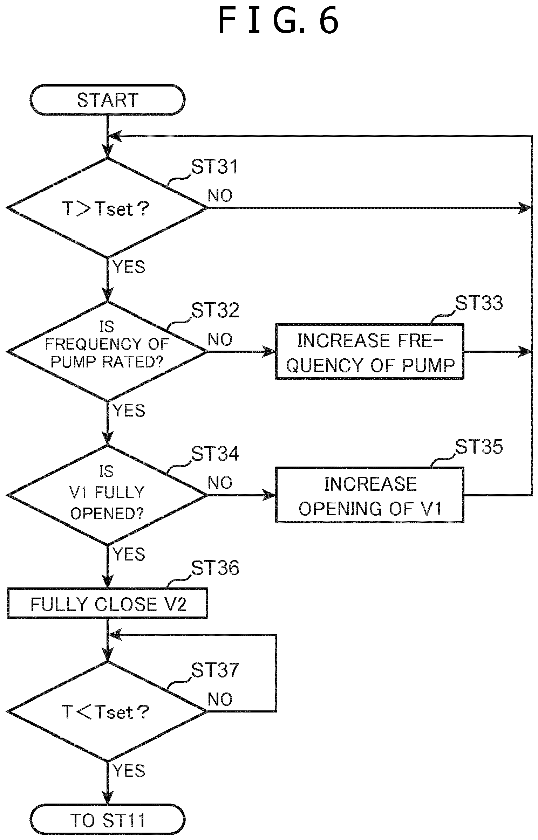

Subsequently, referring to FIG. 6, the emergency control will be described. The emergency control is performed simultaneously with the start-up control, the superheat degree control, and the stop control.

First, the control part 63 judges whether or not the temperature T of the working medium flowed out of the heater 20 is larger than the set temperature Tₛₑₜ (step ST31). As a result, if the temperature T is not larger than the set temperature Tₛₑₜ, the control part 63 returns again to the step ST31, and on the other hand, if the temperature T is larger than the set temperature Tₛₑₜ, the control part 63 judges whether or not the frequency of the pump 28 is rated (step ST32).

As a result, if the frequency of the pump 28 is not rated, the control part 63 increases the frequency of the pump 28 (step ST33), and returns to the step ST31. Thereby, the temperature T is reduced, and the recovered amount of power by the power recovery machine 24 is increased. On the other hand, if the frequency of the pump 28 is rated (if adjustment of the temperature T by adjustment of the frequency of the pump 28 cannot be performed), the control part 63 firstly judges whether or not the bypass valve V1 is fully opened (step ST34).

As a result, if the bypass valve V1 is not fully opened, the control part 63 increases the opening of the bypass valve V1 in order to reduce the inflow amount of the heating medium to the heater 20, that is, the heat gain (step ST35), and returns to the step ST31. On the other hand, if the bypass valve V1 is fully opened (if an operation for reducing the heat gain by the bypass valve V1 cannot be performed), the control part 63 fully closes the on-off valve V2 (step ST36). Thereby, the flow rate of the heating medium flowing into the heater 20, that is, the heat gain becomes zero.

Then, the control part 63 judges whether or not the temperature T is smaller than the set temperature Tₛₑₜ (step ST37). If the temperature T is greater than or equal to the set temperature Tₛₑₜ, the control part 63 judges again whether or not the temperature T is smaller than the set temperature Tₛₑₜ, and on the other hand, if the temperature T is smaller than the set temperature Tₛₑₜ, the control part 63 goes to the step ST11 of the superheat degree control.

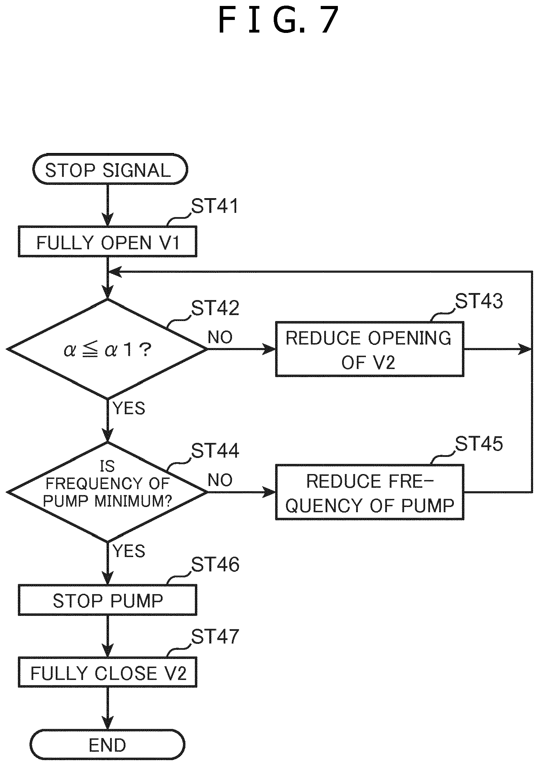

Subsequently, referring to FIG. 7, the stop control will be described.

When receiving a stop signal, the control part 63 firstly fully opens the bypass valve V1 (step ST41). Thereby, the inflow amount of the heating medium to the heater 20, that is, the heat gain begins to be reduced.

Then, the control part 63 judges whether or not the degree of superheat α is less than or equal to the upper limit α1 (step ST42). As a result, if the degree of superheat α is less than or equal to the upper limit α1, the control part 63 judges whether or not the frequency of the pump 28 is a minimum value (a lower limit in which stable driving of the pump 28 is maintained) (step ST44). As a result, if the frequency of the pump 28 is not the minimum value, that is, if the frequency of the pump 28 can be reduced, the control part 63 reduces the frequency of the pump 28 (step ST45), and returns to the step ST42. Thereby, the degree of superheat α is increased.

On the other hand, if the degree of superheat α is larger than the upper limit α1 in the step ST42, the control part 63 reduces the opening of the on-off valve V2 (step ST43), and returns to the step ST42. Thereby, the inflow amount of the heating medium to the heater 20 (the heat gain) is reduced, so the degree of superheat α is reduced.

By repeating the above-mentioned operations, the frequency of the pump 28 is gradually reduced to the minimum value while the degree of superheat α is maintained to be less than or equal to the upper limit α1.

Then, if the frequency of the pump 28 is the minimum value in the step ST44, the control part 63 stops the pump 28 (step ST46), and closes the on-off valve V2 (step ST47). In addition, it is sufficient that the step ST47 is performed when the stop conditions are established, so the step ST47 may be performed simultaneously with the step ST46, that is, when the frequency of the pump 28 becomes the minimum value, or may be performed after a lapse of a predetermined time after the step ST46.

As described above, in the thermal energy recovery device 1 of the present embodiment, the inflow amount adjustment unit 55 adjusts the flow rate of the heating medium flowing into the bypass flow passage 12 and the flow rate of the heating medium flowing into the heater 20, so the temperature T of the working medium flowing out of the heater 20 becomes less than or equal to the set temperature Tₛₑₜ effectively.

Moreover, the control part 63 performs the superheat degree control, so it is possible to improve the power the power recovery machine 24 recovers via the expander 22 while effectively maintaining the temperature T of the working medium flowing out of the heater 20 to be less than or equal to the set temperature Tₛₑₜ.

Moreover, in the superheat degree control, when the degree of superheat α is smaller than the lower limit α2, the control part 63 prioritizes control for increasing the opening of the on-off valve V2 over an operation for reducing the opening of the bypass valve V1. Therefore, compared to the case where the operation for reducing the opening of the bypass valve V1 is prioritized, it is possible to increase the inflow amount of the heating medium to the heater 20 (the heat gain from the heating medium into the working medium within the heater 20) while avoiding the increase in pressure loss generated in the heating medium.

Moreover, in the superheat degree control, when the degree of superheat α is larger than the upper limit α1, the control part 63 prioritizes an operation for increasing the opening of the bypass valve V1 over an operation for reducing the opening of the on-off valve V2. Therefore, compared to the case where the opening of the on-off valve V2 is reduced, it is possible to reduce the inflow amount of the heating medium to the heater 20 (the heat gain from the heating medium into the working medium within the heater 20) while reducing pressure loss generated in the heating medium.

Moreover, the control part 63 performs the emergency control. Therefore, it is possible to effectively inhibit decomposition of the working medium by reducing the inflow amount of the heating medium to the heater 20 (the heat receiving amount of the working medium in the heater 20) while avoiding the increase in pressure loss generated in the heating medium by maximizing the opening of the bypass valve V1.

Moreover, after the emergency control, the control part 63 performs the superheat degree control when the temperature T of the working medium flowed out of the heater 20 becomes less than or equal to the set temperature Tₛₑₜ. Therefore, effective inhibition of decomposition of the working medium and effective recovery of heat of the heating medium are both achieved.

Moreover, the control part 63 performs the stop control, so it is possible to stably stop the thermal energy recovery device 1 while combining both the inhibition of decomposition of the working medium and the effective recovery of heat of the heating medium.

Moreover, during the stop control, the control part 63 closes the on-off valve V2 when the stop conditions are established, so continuation of inflow of the heating medium to the heater 20 at the time of stoppage of the device, that is, continuation of evaporation of the working medium in the heater 20, and thereby increase in the temperature T of the working medium flowed out of the heater 20 are inhibited.

It should be noted that the embodiments disclosed herein are to be considered in all the respects as illustrative and not restrictive. The scope of the present invention is indicated not by the aforementioned description of embodiments but by the claims, and it is intended that all changes within the equivalent meaning and scope to the claims may be included therein.

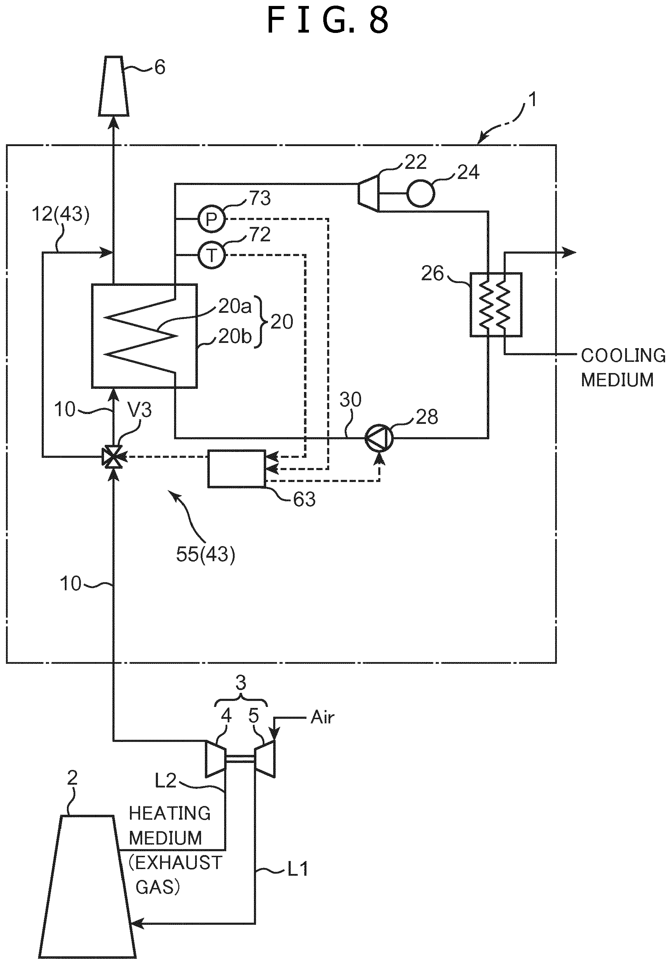

For example, in the third embodiment, instead of the bypass valve V1 and the on-off valve V2, as shown in FIG. 8, a three-way valve V3 capable of adjusting the flow rate of the heating medium flowing into the bypass flow passage 12 and the flow rate of the heating medium flowing into the heater 20 may be provided. However, as with the above-mentioned third embodiment, by providing the bypass valve V1 and the on-off valve V2, it is possible to more precisely adjust the flow rate of the heating medium flowing into the bypass flow passage 12 and the flow rate of the heating medium flowing into the heater 20.

Moreover, in the start-up control and the stop control, instead of the degree of superheat α of the working medium flowed out of the heater 20, heat quantity calculated based on the temperature and flow rate of the heating medium flowing into the heater 20 and the temperature and flow rate of the heating medium flowed out of the heater 20 may be used.

Moreover, the heating medium is not limited to exhaust gas of the engine 2 as long as it may have a temperature greater than or equal to a decomposition temperature of the working medium.

A thermal energy recovery device capable of inhibiting decomposition of a working medium is provided. A thermal energy recovery device (1) includes: a heater (20) which heats a working medium by use of heat of a heating medium; an expander (22); a power recovery machine (24); a condenser (26); a pump (28); a circulation flow passage (30); and an adjustment part (41, 42, 43) which adjusts a heat gain into the working medium within the heater (20) so that an index on a temperature of the working medium flowed out of the heater (20) is less than or equal to a set temperature.

## Claims

1. A thermal energy recovery device comprising:
a heater which heats a working medium by use of heat of a heating medium;
an expander which expands the working medium flowed out of the heater;
a power recovery machine connected to the expander;
a condenser which condenses the working medium flowed out of the expander;
a pump which sends the working medium flowed out of the condenser to the heater;
a circulation flow passage which connects the heater, the expander, the condenser, and the pump in this order; and
an adjustment part which adjusts a heat gain into the working medium within the heater so that an index on a temperature of the working medium flowed out of the heater is less than or equal to a set temperature.

2. The thermal energy recovery device according to claim 1, further comprising:
a heating medium flow passage through which the heating medium flows,
wherein the heater is provided in the heating medium flow passage.

3. The thermal energy recovery device according to claim 2,
wherein the adjustment part has a cooling part which is provided in a region, of the heating medium flow passage, on an upstream side of the heater, and which cools the heating medium so that the temperature of the heating medium flowing into the heater is less than or equal to the set temperature.

4. The thermal energy recovery device according to claim 3,
wherein the cooling part has a cooler which cools the heating medium by a cooling medium

5. The thermal energy recovery device according to claim 4,
wherein the adjustment part performs cooling of the heating medium by the cooling part when the temperature of the heating medium flowing into the heater or the temperature of the working medium flowed out of the heater becomes greater than or equal to a reference temperature lower than the set temperature.

6. The thermal energy recovery device according to any one of claims 3 to 5,
wherein the adjustment part adjusts an inflow amount of the working medium to the heater so that the temperature of the working medium flowed out of the heater as the index is less than or equal to the set temperature.

7. The thermal energy recovery device according to claim 1, further comprising:
a heating medium flow passage through which the heating medium flows;
a heat exchanger which evaporates an intermediate medium by exchanging heat between the heating medium and the intermediate medium; and
an intermediate medium flow passage through which the intermediate medium flows,
wherein the heater is provided in a region, of the intermediate medium flow passage, on a downstream side of the heat exchanger.

8. The thermal energy recovery device according to claim 7,
wherein the adjustment part adjusts a heat gain from the intermediate medium into the working medium within the heater so that the index is less than or equal to the set temperature.

9. The thermal energy recovery device according to claim 6,
wherein the adjustment part has:
a pressure reducing valve provided in a region, of the intermediate medium flow passage, between the heat exchanger and the heater; and
a control part which adjusts opening of the pressure reducing valve so that the index is less than or equal to the set temperature.

10. The thermal energy recovery device according to claim 2,
wherein the adjustment part has:
a bypass flow passage connected to the heating medium flow passage so as to bypass the heater; and
an inflow amount adjustment unit which adjusts a heat gain from the heating medium into the working medium within the heater so that the temperature of the working medium flowed out of the heater is less than or equal to the set temperature by adjusting a flow rate of the heating medium flowing into the bypass flow passage and a flow rate of the heating medium flowing into the heater.

11. The thermal energy recovery device according to claim 10,
wherein the inflow amount adjustment unit has:
a bypass valve provided in the bypass flow passage and capable of adjusting opening thereof; and
a control part which controls opening of the bypass valve so that the temperature of the working medium flowed out of the heater is less than or equal to the set temperature.

12. The thermal energy recovery device according to claim 11,
wherein the inflow amount adjustment unit further has an on-off valve provided in a region, of the heating medium flow passage, parallel to the bypass flow passage, and capable of adjusting opening thereof, and
wherein the control part controls the opening of the bypass valve and the opening of the on-off valve so that the temperature of the working medium flowed out of the heater is less than or equal to the set temperature.

13. The thermal energy recovery device according to claim 12,
wherein the control part performs superheat degree control for controlling the opening of the bypass valve, the opening of the on-off valve, and the inflow amount of the working medium to the heater so that a degree of superheat of the working medium flowed out of the heater falls within a predetermined range.

14. The thermal energy recovery device according to claim 13,
wherein in the superheat degree control, when the degree of superheat is smaller than a lower limit of the predetermined range, the control part prioritizes control for increasing the opening of the on-off valve over an operation for reducing the opening of the bypass valve.

15. The thermal energy recovery device according to claim 13 or 14,
wherein in the superheat degree control, when the degree of superheat is larger than an upper limit of the predetermined range, the control part prioritizes an operation for increasing the opening of the bypass valve over an operation for reducing the opening of the on-off valve.
